## Europäisches Patentamt

(19) **European Patent Office**

**Office européen des brevets**

(11) Publication number: **0 037 738**
**B1**

(12) # EUROPEAN PATENT SPECIFICATION

(45) Date of publication of the patent specification:
17.08.83

(51) Int. Cl.³: **H 04 N 5/783, G 11 B 21/10**

(21) Application number: **81301511.2**

(22) Date of filing: **07.04.81**

(54) **Automatic track following feature for helical video recorder.**

(30) Priority: **08.04.80 US 138436**

(43) Date of publication of application:
**14.10.81 Bulletin 81/41**

(45) Publication of the grant of the patent:
**17.08.83 Bulletin 83/33**

(84) Designated Contracting States:
**DE FR GB**

(56) References cited:
**DE-A-2 907 149**
**DE-A-2 908 125**
**DE-A-2 911 083**
**DE-A-2 911 292**
**DE-A-2 919 391**

(73) Proprietor: **MINNESOTA MINING AND MANUFACTURING COMPANY, 3M Center, P.O. Box 33427, St. Paul, MN 55133 (US)**

(72) Inventor: **Bradford, Robert S., 2501 Hudson Road P.O. Box 33427, St. Paul, Minnesota 55133 (US)**
Inventor: **Brookhart, Marshall R., 2501, Hudson Road P.O. Box 33427, St. Paul, Minnesota 55133 (US)**
Inventor: **Dy, Bennett G., 2501, Hudson Road P.O. Box 33247, St. Paul, Minnesota 55133 (US)**

(74) Representative: **Baillie, Iain Cameron et al, c/o Ladas & Parry Isartorplatz 5, D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Automatic track following feature for helical video recorder

This invention relates to magnetic recording and reproducing apparatus, particularly to video recorders and reproducers of the helical scanning type in which a magnetic record/playback head is operatively supported within a rotating drum for scanning a magnetic tape along a plurality of adjacent discrete tracks oriented at an angle relative to the lengthwise direction of the tape, and in which special track following features are provided to enable reproduction of pictures at normal speeds, fast and slow forward and reverse speeds, and at stop motion.

### Background Art

Helical scan video tape recorders embodying automatic track following features to compensate for non-uniform tape motion, tape stretching, and the like are becoming well known. Such recorders are, for example, disclosed in U.S. Patents 4,143,405 (Kubota/Sony) and in 4,151,570 (Ravizza/Ampex).

In addition to such patents wherein track following is disclosed, it is also becoming known to provide helical scan video recorders with systems enabling the playback head to follow a selected helical track, regardless of the tape speed, be it normal playback forward, fast forward, slow motion, stop motion and reverse. For example, patents disclosing recorders enabling such special effects are disclosed in U.S. Patent 4,163,993 (Ravizza) and Great Britain Patent No. 2,016,787 (Kubota/Sony).

In a conventional helical scan video tape recorder, the rotary transducer or head assembly is provided with one or more magnetic transducers adapted to scan successive parallel tracks on a magnetic record tape so as to record and/or reproduce video signals along such tracks. In general, one or more of the transducers is caused to rotate, such as within a drum assembly so as to scan diagonally across the tape, while the tape itself is transported longitudinally. A typical helical scan VTR thus preferably includes at least one record or playback transducer within a drum assembly about at least a portion of which is wrapped the magnetic record tape. Typically, during recording, a servo system will be provided to ensure uniform motion of the tape and to control the rotation of the transducer with respect to the tape movement, while control pulse signals are recorded on a portion of the tape. During normal reproduction, a similar servo control system will be used to synchronize the movement of the tape and control the rotation of the head assembly in accordance with the recorded control pulse signals.

In recently disclosed VTR's capable of various kinds of reproducing motions, such as stop or still motion, slow motion, or quick and fast motion, the tape speed obviously differs from the tape speed utilized during recording. Consequently, during playback, the scanning path of each of the playback heads within the drum assembly is different from the path followed during recording. That is, the scanning path is inclined or differently angularly disposed with respect to the recorded track. As the result of such angular differences, in the various reproducing modes other than normal speed, guard band noise, cross talk, picture jumping, and the like will result from the tracking errors due to inclination of the scanning paths of the head relative to the recorded track.

Accordingly, for example, such as disclosed in U.S. Patent No. 4,080,636 (Ravizza), such tracking errors are adapted to be corrected by mounting the playback head on an adjustable support assembly such as a piezoelectric reed which is adapted to deflect or flex in a direction generally transverse to the diagonal track along the tape. By means of a suitable error correction signal applied to the piezoelectric element, the head is appropriately deflected transverse to the tape track to cause the scanning path to coincide with the parallel record tracks.

Helical scan VTR's adapted to create special altered time base reference effects have not been particularly successful to date because of the spurious noise generated during playback due to the transducing head crossing from one track to another. For example, slow motion effects and video recording necessarily require that the data on one track, typically a full video field per track, be repeated one or more times during the playback so that the visual motion is slowed down. Similarly, for fast forward motion, one or more tracks must be skipped. The resultant path that the transducing head follows along the tape during such reproduction processes will therefore be substantially different than the recorded track that was made during the recording process. Thus, for example, an apparatus is disclosed in U.S. Serial No. 677,815 (Hathaway et al.) filed April 16, 1976, which application has been published as Belgian Patent No. 852,630, whisch permits the tracks to be accurately followed even though the transport speed varies within wide limits. While the apparatus there described represents a significant improvement over other helical scan VTR's in that it proposes to afford the capability of reproducing special motion effects, it similarly creates transient conditions resulting in noise bars in the video image under certain operating conditions.

In order to achieve such special motion effects by appropriately deflecting the playback head transverse to the diagonal tracks, it has been previously disclosed to generate a ramp type of signal which is coupled to a head deflection assembly in order to gradually increase the deflection of the head transversely in an amount proportional to the difference between the recorded tape path and that followed by the head. Thus, for example, in Great Britain patent 2,016,787, an apparatus is depicted in which pulse generators are positioned adjacent a head drum assembly to provide pulses indicative of the head position, which pulses are then coupled to a ramp generator, together with appropriate additional pulses from stepdown counters and the like in order to provide the requisite ramp signal. In contrast, in U.S. Serial No. 677,815 referenced above, such ramp signals are provided as the result of an integrator circuit, the input to which is driven in accordance with pulse generators responsive to a trigger pulse indicative of the end of each video scan and forward and reverse tape direction detectors.

### Disclosure of Invention

In common with the prior art patents referenced above, the present invention is directed to a rotary scan video tape player of the type having a playback head operatively mounted within a rotatable drum for scanning a magnetic tape along a plurality of adjacent discrete tracks oriented at an angle relative to the lengthwise direction of the tape. In this player, the head is mounted within the drum on a head positioning transducer for effecting movement of the head within a given range in opposite directions relative to a nominal position along a path generally transverse to the direction of the tracks in response to a head position control signal.

The invention includes a network for forming the head position control signal as a ramp which varies in amplitude, duration and polarity for correcting the transverse position of the head according to the need for correction of the angle of the scanning path, the available range of the head positioning transducer and frame rate conversion requirements.

The instantaneous amplitude of the ramp is dictated by three components which are related according to the expression

$$Y = Y_0 + Y_1 + Y_2 ,$$

where $Y_0$ represents an instantaneous amplitude component related to the difference between normal tape speeds and the instantaneous tape speed, $Y_1$ represents an instantaneous amplitude component related to the need to reset the head positioning transducer at the end of appropriate field scan intervals to maintain it within its available range and to enable frame conversion, and $Y_2$ represents an instantaneous amplitude component for centering the position of the head over the recorded tracks.

The magnitude of $Y_1$ is selected to cause the head to be reset upon the completion of each scan an integral multiple of the center to center track spacing distance D, depending upon frame conversion requirements and upon the position of the head relative to its nominal position. Such resetting of the head to cause the head to jump or skip to adjacent tracks is required because, for example, the tape may be moving at one-half speed so each recorded frame will have to be repeated or played twice. Different speeds and directions of tape movement require different field repeat or skip (in the case of speeds greater than normal) sequences.

Repeating or skipping a scanned field requires resetting the head to the correct position at the start of the next scan. Playing the next track in sequence requires that the ramp waveform of the head positioning control signal continue without interruption through the next rotation of the scanning drum. Such a ramp waveform can be continued for only a few rotations of the scanning drum before the head positioning transducer will exceed its allowed range. Thus frame conversion (repeat or skip) sequences must further be limited to the available dynamic range of the head positioning transducer.

In the present player, the network for forming the $Y_0$ component of the head position control signal thus includes means which respond to vertical sync pulses from a reference video signal for providing a pulse train containing a predetermined number N of clock pulses for each video field. Where each field has a duration $T_v$, the period of the clock pulses then equals

$$T_v \left(\frac{1}{N}\right).$$

In a preferred embodiment, a reasonably large number of such clock pulses are provided for each video field, such as 32, in order that numerous head position adjustments may be made at relatively small increments along each helical track corresponding to each video field.

Means are further included for providing a tape motion signal having a number M of pulses occurring during each television field recorded on tape. The number of M coupled with a direction signal to establish sign is indicative of the speed and direction of tape movement, respectively, while the spacing between successive motion indicating pulses corresponds to the time required for 1/N of the length of tape containing one video field to traverse a given location.

Means are further provided for comparing the number of M motion indicating pulses occurring during the time $T_v$ that N clock pulses are provided, to thereby produce an off-speed indicating signal having a number P for each time period $T_v$, such that $P = -N + M$. To generate the $Y_0$ component of the head position control signal ramp, control means are provided which respond to the off-speed indicating number P. The magnitude of the resultant ramp component $Y_0$ varies between 0 and d, where d is equal to

$$\frac{D}{N} \ (P),$$

and where D is the distance on the tape between adjacent tracks corresponding to successive fields. Accordingly, in an ideal situation the application of the head position control signal to the head position transducer causes transverse movement of the head in an amount commensurate with the relative shift of a given tracks as the result of tape movement to enable the head to align its path parallel with the track regardless of tape speeds or direction.

Means are also provided which respond to a video field rate sync pulse for monitoring the magnitude of the head position control signal and the direction of tape motion for supplementing said signal with a reset signal, the magnitude $Y_1$ of which would result in transverse movement of the head in multiples of the distance D, thereby allowing successive video fields recorded on the tape to be jumped, skipped or repeated, as explained in the rules set forth below.

The magnitude $Y_1$ of the reset signal component is controlled to reset the head positioning transducer at the start of each scan to whichever track relative to the track just scanned is appropriate to provide requisite frame conversion and to maintain the control signal within the available range of the head positioning transducer. The magnitude $Y_1$ thus consists of a positive or negative jump signal having an amplitude such as to cause the head to move transversely a distance which is an integral multiple of D, and is generated as needed at the end of each vertical period $T_v$ according to the following rules:

Rule 1:

For forward tape speeds between zero (i.e., stop motion) and normal (1 x) at which $0 < M \leq N$:

a)  If at the end of the video field period $T_v$, the magnitude of the head positioning control signal ramp is such that the head is below its nominal center-line position, generate a jump signal causing the head to move a distance $+D$.

b)  If the magnitude of the control signal ramp is such that the position of the head is above its nominal center position, inhibit the production of any reset signal.

Rule 2:

For fast forward speeds, i.e., $>1 \times$ at which selected frames must be skipped, and at which $M > N$:

a)  If at the end of the video field period $T_v$, the magnitude of the control signal ramp is such that the position of the head is above its nominal center position, generate a skip signal causing the head to move a distance $-D$.

b)  If the magnitude of the control signal ramp is such that the position of the head is at or below its nominal position, inhibit the production of any reset signal.

Rule 3:

For Reverse speed, i.e., up to $-1 \times$, at which $M < 0$:

a)  If at the end of the video field period $T_v$, the magnitude of the control signal ramp is such that the position of the head is below its nominal center position, generate a jump signal causing the head to move a distance $+D$. If the head position is still below its nominal position, generate a second jump signal causing the head to move a second distance $+D$, i.e., double reset.

b)  If the magnitude of the ramp is such that the head is above its nominal center position, inhibit the production of any reset signal.

In a preferred embodiment, in order to center the head over the track and to accommodate capstan slip, the player of the present invention further includes track centering means responsive to the intensity of an RF video playback signal provided by the playback head for generating a closed loop feedback signal having an amplitude $Y_2$ which modifies the head position control signal and thereby causes appropriate additional transverse movement of the head to thereby maintain the playback signal intensity at or near a maximum value. Desirably, such a means for generating a closed loop feedback signal includes a detector means responsive to such a playback signal for providing a playback level sense signal which is indicative of the amplitude of the playback signal independent of the picture level therein. Thus, for example, such detector means may be provided with additional timing control signals such that the RF amplitude is determined during synchronization pulse intervals. The closed loop feedback signal means desirably further includes means for storing a digital representation of the level sense signal, together with means for comparing such a stored digital representation of the level sense signal with a subsequently received digital representation of the level sense signal for providing an error signal indicative of the relative amplitudes therebetween. Finally, such as closed loop feedback signal generating means includes control means for supplementing the head position control signal to thereby control the transverse head movement so as to minimize the error signal.

## Brief Description of Drawings

Figure 1 is a top view of the rotating drum/playback head assembly utilized in the present invention;

Figure 2 is a cross-sectional side view of a portion of the drum assembly of Figure 1, showing the details of the head mounting structure;

Figure 3 is a combined pictorial and block diagram of one embodiment of the system of the present invention;

Figure 4 is a block diagram of an alternative construction of the present invention;

Figure 5 is a simplified flow chart of the complete steps involved in processing signals pursuant to the present invention;

Figures 6—9 are detailed flow charts setting forth particular signal processing operations outlined in Figure 5, and

Figure 10 is a block diagram of a preferred embodiment of an automatic track following subsystem embodied in the present invention.

## Detailed Description

For the purpose of simplification and to facilitate understanding of the present invention, the latter is hereinafter described in detail with respect to an apparatus for recording and reproducing video signals such as in a video tape recorder (VTR). However the problems to which the invention is addressed and the solution of those problems as disclosed herein are not limited to video signal recording and/or reproducing apparatus. Accordingly, it is understood that the invention is similarly applicable to other types of analog and digital recording and reproducing devices.

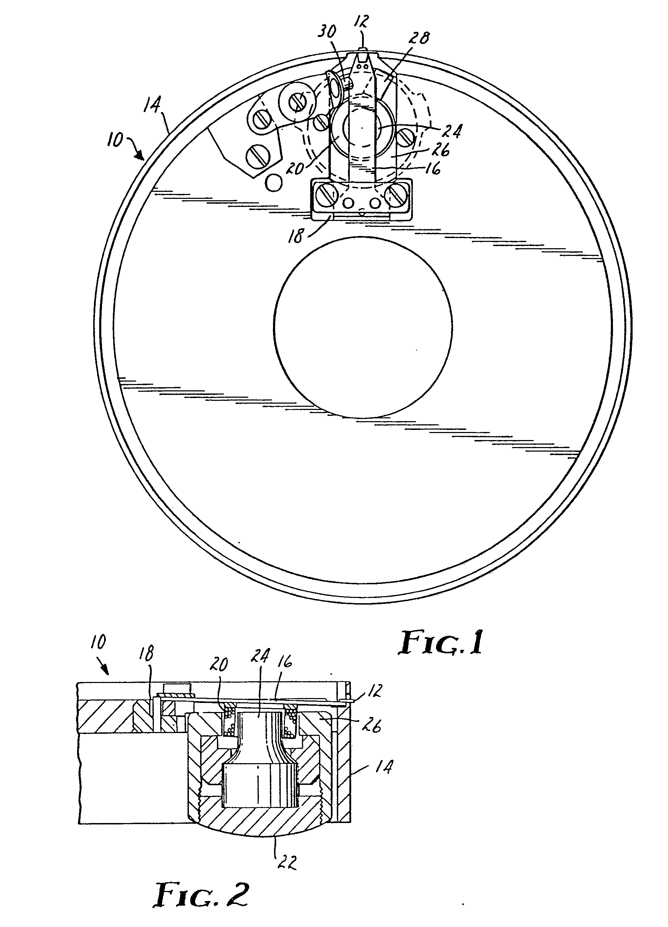

Referring first to Figure 1, it will be seen that a typical rotary head scanning device (scanner) 10, for example, such as used in a helical scan video tape recorder includes a magnetic record/playback head 12 which is mounted within a rotatable drum assembly 14 about the periphery of which a magnetic recording tape is wrapped in a helical path in either an alpha or an omega configuration. In such a recorder a magnetic tape will be guided by appropriate posts or rollers (not shown) to cause the tape to helically extend about a significant portion of the periphery of the drum 14 such that as the scanner rotates, the tape is moved diagonally across the periphery of the drum. The head 12 scans successive parallel skewed tracks across the tape and generates an electrical signal representative of the information previously recorded on the track. This electrical signal is then fed to signal processing circuitry for processing it in a manner as set forth hereinafter.

It is apparent that the extent to which the head 12 can faithfully reproduce the information originally recorded on the successive helical tracks depends upon accurate registration of the head 12 with each of the successive tracks. Tracking problems arise, for example, when the video tapes or the tracks thereon become distorted, such as by temperature or humidity induced dimensional changes, or by movement of the tapes during playback at speeds other than that utilized during the recording process.

Because of such tracking problems, it is desirable to provide a signal indicative of the instantaneous position of the head 12 with respect to successive tracks on the record medium, and to further provide means responsive to such a signal for deflecting the head 12 transversely with respect to the tracks so as to enable centering of the head thereon. More particularly, when perfect tracking between the head 12 and each successive track is not occurring, an electrical correction signal is generated and applied to a head positioning assembly on which the head 12 is mounted. This correction signal causes the assembly to be deflected, thereby moving the head toward the track center to thereby reduce tracking errors. The deflection of the head thus not only enables the head to accurately follow tracks which may be distorted due to physical shrinkage or stretching, or the like, of the record medium, but also to follow tracks regardless of differences between the playback tape speed and the tape speed utilized during the previous recording operation.

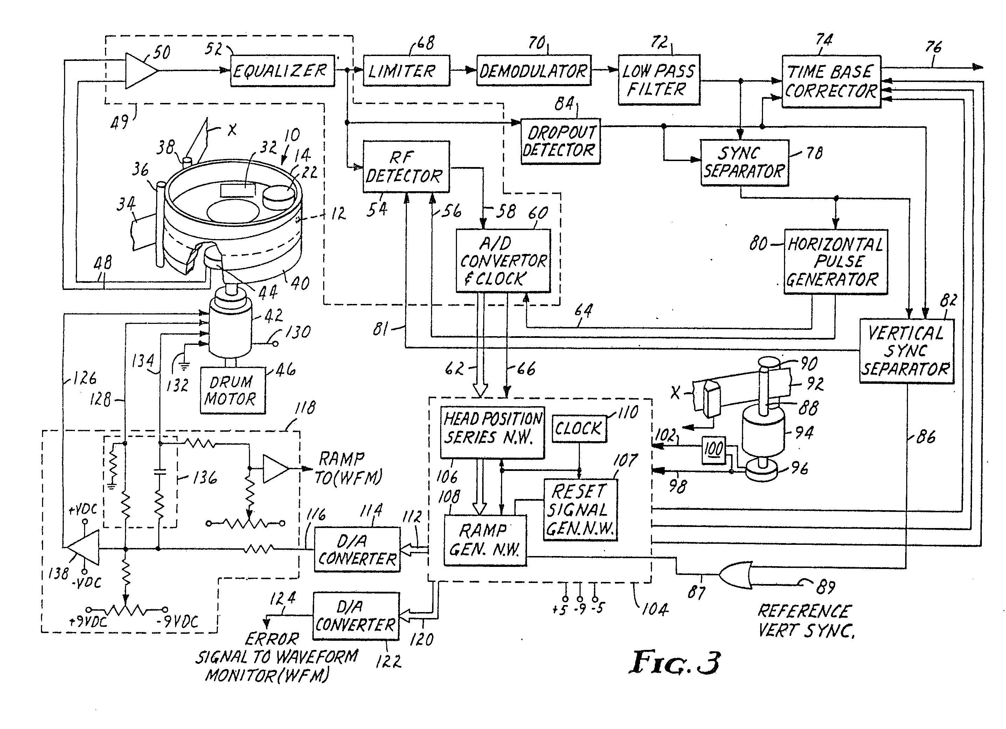

As shown in Figures 1 and 2, the head mounting means includes a flexible beam 16 which is cantilevered outward from a supporting pedestal 18, which is a portion of the drum 14. Also mounted on the cantilevered beam 16 is a drive coil 20, similar in construction to that utilized in a conventional electromagnetic type speaker and which is secured to the beam 16 by clamps and/or a suitable adhesive. Electrical leads (not shown) coupled to coil 20 are then connected to the stationary portion of the apparatus by means of a suitable slip-ring assembly.

As particularly shown in Figure 2, the drive coil 20 is adapted to interact with a permanent magnetic structure 22 which includes a center pole member 24 and radial flux concentrating pole members 26. Accordingly, an electrical signal in the form of a DC current impressed upon the drive coil 20 will cause the generation of a magnetic field which either opposes or aids the field produced by the permanent magnetic structure 22 and thereby creates a driving force on the beam 16 to move the head 12 from a center or nominal position along the axis of the drum assembly 14 and hence generally transverse to the tracks of the record media over a given range.

It is further desirable to provide an instantaneous signal indicative of the exact extent to which the head 12 is deflected within the drum 14 in order to enable closed-loop electrical damping of such movement. Accordingly, as is particularly evident in Figure 1, an electro-optic means is included for sensing the extent of such transverse movement. Such a means includes a LED 28 mounted proximate to the head 12 and a photo-transistor 30. These two members respectively are mounted such that the amount of light produced by the LED 28 is increasingly obscured by the beam 16 so as to modify the light received by the photo-transistor 30 in direct proportion to the extent of transverse deflection of the beam 16. Not shown in Figure 1, is a small printed circuit amplifier for providing an initial stage of amplification to the signal produced by the photo-transistor 30 enabling coupling of the signal generated to the stationary portions of the recorder by means of a suitable slip-ring assembly (not shown). It may also be noted that electrical leads for signals produced by the head 12 may similarly be coupled to the non-rotating portions of the apparatus, such as by a suitable rotary transformer (not shown).

The manner by which the signals provided by the respective members within the rotating drum assembly 14 are processed to control the relative head position is further set forth in the combined pictorial and block diagram of Figure 3. As may there be seen, the rotary head scanning device 10 includes the record/playback head 12 mounted on the rotating drum assembly 14, together with the permanent magnet structure 22, and the printed circuit amplifier 32. It may also there be seen that a magnetic tape 34 provided from a supply reel is helically guided around the drum assembly 14 by means of tracking guides 36 and 38. To further define the transport path for the tape, a second stationary drum 40 is positioned coaxial with the rotating drum assembly 14 and further includes a helically inclined ramp which further assists in guiding the tape about the helical path. Also shown in conjunction with the rotary scanning device 10 is a slip-ring assembly 42 for coupling the signals from the head positioning mechanism and amplifier 32, a rotary transformer 44 for coupling the RF signals from the head 12, and the servo driven drum motor 46 for providing the requisite rotary motion to the assembly.

As further shown in Figure 3, signals from the head 12 are coupled via the rotary transformer 44 on leads 48 to the track centering network 49. This network 49 includes a preamplifier stage 50 and an equalizer 52 for processing the RF video signals retrieved by the head 12 in a conventional manner. Within the track centering network 49, the equalized signals are coupled to an RF detector 54 to which is also coupled timing signals on leads 56 and 81 so as to enable the detector 54 to determine the amplitude of the RF video signal within a given time period which is independent of the video picture content. Preferably, such timing signals enable the detector to operate only on the horizontal sync tip portion of the FM RF video signal. The specific construction of such an RF detector is of course well known to those skilled in the art and need not be further discussed herein. Nonetheless, the produced signal therefrom, which is preferably linearly indicative of the amplitude of the horizontal sync tip region of the RF envelope is coupled on lead 58 to an A to D converter and clock network 60 which converts the analog signal on lead 58 into a parallel digital signal corresponding thereto on leads 62 for further processing. To control the timing of the digitized signal within the A to D converter, an additional timing signal on lead 64 is provided to the network 60. Further, the A to D converter 60 also provides an end of convert (EOC) signal on lead 66, which signal indicates data ready, and is used to signal the head position control network 104 that the RF amplitude has been sensed and digitized, and is ready to be read.

The RF detector 54 and A to D converter 60 which operates on the output therefrom may preferably first include an RF switch which is strobed by a signal on lead 56 from the horizontal pulse generator 80 at the horizontal sync tip intervals, i.e. at 7.06 MHz. The amplitude of the signal at that time is then coupled to an amplitude demodulator; and the demodulated amplitude coupled through a carrier reject filter, having cutoff above two MHz, to a DC restorer circuit and thence to a sample and hold circuit. The sample and hold circuit may in turn be strobed by the pulse from the horizontal pulse generator and the output therefrom passed through a low pass filter having a cutoff at about 1 kilohertz to a second sample-and-hold circuit. Accordingly, the amplitudes of successive horizontal sync signal components may be compared within the microprocessor 106 to generate the requisite head position servo control signal.

In addition to utilizing the signals provided by the equalizer circuit 52 in the track centering network 49, the signals from the equalizer 52 are also coupled to a limiter circuit 68 and are thence demodulated within the demodulator circuit 70, coupled through a low pass filter 72 and thence into a conventional time base corrector 74, after which fully corrected video output signals are provided on lead 76. The limiter 68, the modulator 70 and the low pass filter 72 are all conventional circuits and need no further description herein. The time base corrector circuit 74 is preferably a commercial unit such as provided by Nippon Electric Corporation (NEC) as Model NTC-10. The non-time base corrected video signal from the low pass filter 72 is further coupled to a sync separator circuit 78, and outputs therefrom are in turn coupled to the horizontal pulse generator 80 and the vertical sync separator 82. The output signal from the equalizer 52 is further coupled to a dropout detector 84 and signals indicative of a detected dropout are thus provided to the time base corrector 74, sync separator 78, and vertical sync separator 82, to thereby deactivate the unit in the event of a detected dropout so as to prevent an erroneous sync pulse signal from being generated.

The horizontal pulse generator 80 is again of conventional construction and includes circuits for providing timing circuits on leads 56 and 64 to the RF detector 54 and A to D converter 60 as described hereinabove. These signals thus control the timing of the A to D converter and enable the production of the signal from the RF detector only during the horizontal sync pulse interval. Analogously, the vertical sync separator 82, again of conventional construction, provides a vertical sync pulse on lead 86 synchronous with the signal provided by the playback head 12, which synchronizing signal is further used to control the head positioning signals in a manner to be described hereinafter. Vertical sync is also provided on lead 81 to the RF detector 54, which contains a sample timing processor (not shown) to ensure that the RF level is measured at the same point or points along each helical track.

In order to control the transverse position of the head 12 relative to the helical tracks on the tape media to accommodate varying tape speeds, means are provided for sensing such speeds. As shown in Figure 3, as the tape leaves point X on the drum assembly 10, it is coupled along a transport path between a friction treated capstan 88 and pressure roller 90 prior to the tape 92 being rewound on a takeup reel. The capstan is in turn driven by a capstan drive motor 94, and associated therewith is a capstan tachometer 96, which provides an accurate representation of tape motion via an instantaneous tape speed signal on lead 98. In a conventional manner the tachometer 96 provides a pair of signals, the relative phase therebetween being indicative of the direction of tape motion. These signals are coupled to a tape direction signal processing circuit 100, which then provides a direction dependent signal on lead 102.

As further shown in Figure 3, the head position control network 104 receives inputs 62 and 66 from the A to D converter 60, the tape speed and direction indicating signals on leads 98 and 102, and a vertical pulse on leads 87 which is formed from the tape vertical sync signal on lead 86, »OR« gate protected for dropout immunity by the reference vertical sync signal on lead 89. The network 104 is preferably formed using a microprocessor and associated circuitry, a first portion thereof 106 being dedicated for processing head position servo control signals, a second portion 107 being dedicated for processing reset signals, and a third portion 108 being dedicated for processing signals to generate a ramp waveform, the period and amplitude of which is controlled by the various input signals as supplemented by the outputs from the portions 106 and 107, and is used to appropriately drive the head positioning assembly. In such an embodiment, the network 104 further includes a crystal control clock 110 for maintaining appropriate timing signals for the respective microprocessor portions 106, 107 and 108 and support circuitry. The head positioning control signal ramp provided by the control network 104 is thereafter coupled on parallel leads 112 in digital form to a first digital to analog converter 114, which converts the digital form of the ramp signal into an analog signal corresponding thereto on lead 116. This signal is coupled to the deflection amplifier 118 and the output therefrom coupled on leads 126 and 128, respectively, to the slip ring assembly 42 for coupling to the drive coil 20 (See Fig. 2). A second set of digital signals in parallel output form are provided on leads 120 to D to A converter 122 to provide an analog signal on lead 124 to enable display of the track centering error signal on a waveform monitor.

Also coupled by means of the slip ring assembly 42 are DC power and ground connections on leads 130 and 132 for the position sensor. The output from the sensor amplifier 32 is coupled on lead 134 to the impedence network 136. The position sensing signal, together with the impedance network, thereby provide a second input signal which is sensitive to extraneous variations in the position of the head 12, and when added to the error signal on lead 116 acts to electrically damp the drive signal. As thus coupled to the drive coil 20, oscillations in the beam deflection are counteracted, and precise control over the movement and position of the beam 16 and head 12 mounted thereon is obtained. The combined signals on lead 116 are thereafter coupled together with a DC offset signal into an amplifier 138, the output of which is coupled on lead 126 to the slipring assembly and thence to the drive coil 20.

Having now described the basic components making up the head positioning assembly of the present invention, the manner by which the head position control network 104 may be structured may now be set forth. The ramp waveform generator microprocessor 108 and the crystal controlled clock 110 coupled thereto, is firstly structured to respond to the vertical pulses provided on lead 87 to provide a pulse train containing a predetermined number N of clock pulses for each video field. Since each video field has a duration $T_v$, the period of the clock pulses thus produced is equal to

$$T_v \times \left(\frac{1}{N}\right).$$

Analogously, the capstan tachometer 96 is constructed to provide a signal indicative of the instantaneous tape speed, which signal contains a number M of fractional speed indicating pulses occurring during the time $T_v$, which pulses are coupled to the network 104 via lead 98. Within the network 104, they are then acted on by the direction indicating signal on lead 102 such that the polarity of the pulses M is indicative of the direction of tape motion, while the timing of each of the pulses corresponds to the time required for a predetermined length of tape to traverse the capstan. Accordingly, when the tape is traversing at normal video record and playback speeds, N speed indicating pulses are produced during the traverse past the capstan of a length of tape having recorded thereon one video field. The distance between tracks is referred to as D, and there are thus N of the M speed indicating pulses to represent the distance D. Preferably, the capstan tachometer is simply coupled to the capstan shaft per se such that the pulses produced thereby are in direct proportion to the revolution of the capstan and hence to the instantaneous speed of the tape past the capstan.

Having now coupled to the ramp generator microprocessor 108 the pulse train containing the predetermined number N of clock pulses for each video field together with the number M of speed indicating pulses occurring during the time $T_v$, which thus corresponds to the actual instantaneous tape speed, the number M of pulses and number N of clock pulses provided during the time $T_v$, may be compared to provide a tape speed indicating signal having the number P of off-speed indicating pulses for each time period $T_v$, such that P is equal to $-N+M$. The microprocessor section 108 is further structured to respond to the relative speed indicating signal having the number P of off-speed indicating pulses for generating the head position control signal, the magnitude of which varies between 0 and d, where d is equal to

$$\frac{D}{N} (P),$$

where D is the distance on the tape between adjacent helical tracks corresponding to successive video fields.

For example, at normal tape speeds where M is equal to N, d will be equal to 0, such that no deflection of the head 20 is provided and upon each revolution of the drum assembly 10 the head is automatically repositioned to follow the next successive track. Similarly, at stop motion, M will be equal to 0, indicating that no pulses from the tachometer 96 are being produced, and therefore d will equal D, such that a uniformly increasing ramp signal will be provided to the drive coil during each video interval so as to cause the head to be uniformly scanned across a single helical track. Similarly, for any variation of speeds, other than stop motion or full speed motion, including both fractional forward speeds, high forward speeds, and reverse motion, the difference between N and M pulses will be indicative of the requisite signal to be applied to the drive coil 20 so as to cause the head to move transversely in a proportional amount to accommodate the relative track displacement.

Upon completion of a given scan, the microprocessor section 107 processes the data received from microprocessor section 106 in response to the vertical pulse on line 87 to determine the reset amplitude $Y_1$ required to position the beam 16 correctly prior to the start of the next rotation of the scanner drum. The microprocessor 107 determines the reset according to the rules stated hereinabove, thus providing both frame conversion and maintaining the deflection of the beam 16 within its available range of deflection.

In addition to the generation of such a ramp wave form supplemented with the reset jump pulse in an open loop system which is thus independent of the precise position of the head on a given track, a closed loop feedback system is desirably added so as to maintain the head centered within a given track. In such a system, means are provided for determining a first amplitude of a picture level independent portion of the RF video playback signal following such movement. The A to D converter 60 then stores the digital representation of that first amplitude, and the servo portion 106 further supplements the head position control signal to cause movement of the head a second nominal distance in a known direction. The detector 54 then determines a second amplitude of a picture level independent portion of the RF video signal following the movement in the known direction; and the microprocessor section 106 compares the first and second amplitudes to generate a track centering signal, to thus cause the successive movements of the head following each comparison a nominal distance in whichever transverse direction is appropriate to cause the second amplitude to exceed the first received amplitude.

The ramp generator section 108 of the microprocessor within the control network 104 is desirably structured to provide a counter which determines the instantaneous amplitude of the ramp head positioning control signal. The microprocessor presets such a counter at the onset of each video field to a preselected number of counts. Similarly, the microprocessor also generates a predetermined number of counts upon each occurrence of one of the fractional speed indicating pulses received from the tachometer on lead 98. The microprocessor is further structured to respond to the generation of each of the predetermined number of counts for subtracting that number of counts from the number of counts remaining in the counter, such that the remaining number at any given time during a given field is proportional to the distance the head needs to be moved transverse to the direction of the tracks to enable the head to follow that track, regardless of differences between the instantaneous tape speed and the speed at which the recording was originally produced. That number is then coupled on leads 112 to the digital-to-analog converter 114 so as to generate an analog signal on lead 116, the magnitude of which is proportional to the remaining number of counts such that a corresponding current may be generated in the deflection amplifier 118 to drive the drive coil 20 with the requisite ramp wave form signal.

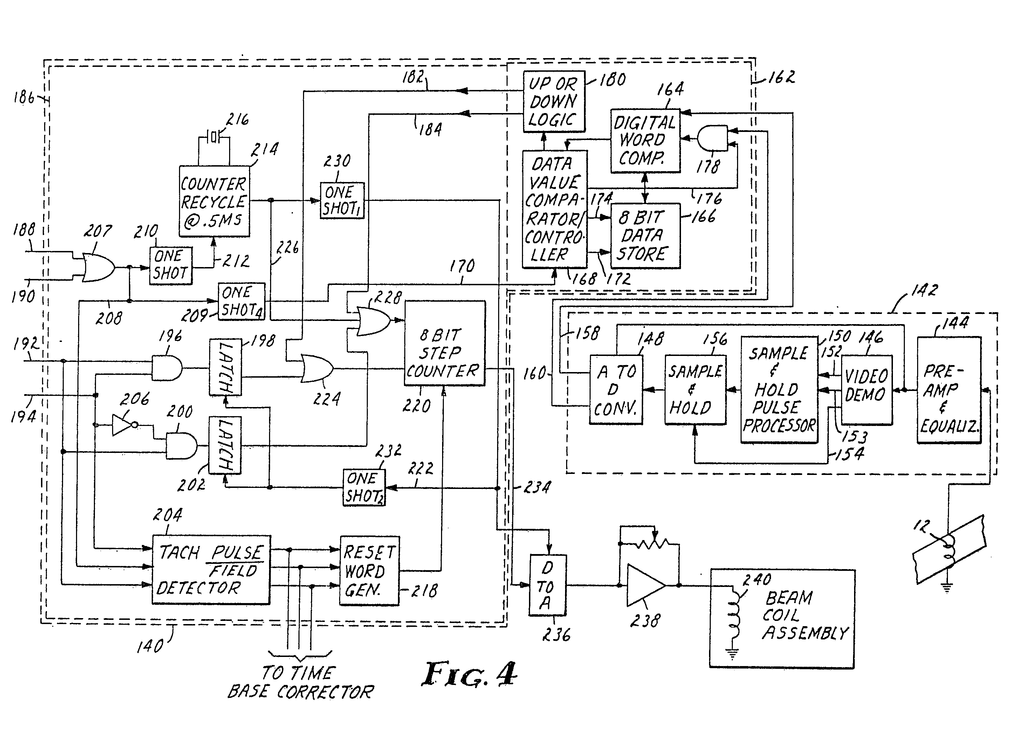

While the generation of the head position control signal has been described hereinabove as preferably being provided by means of the control network 104, including a head position servo section 106, a reset section 107, and a ramp generation section 108, it is also within the scope of the present invention that such head positioning control signals may be generated by discrete digital signal processing components. Thus, for example, as shown in Figure 4, a playback head 12 identically structured on a deflectable member within a rotating head assembly as shown in Figures 1 – 2, may provide an RF video playback signal which is processed in a track centering network 142 and in a head position control network 140. The track centering network 142 includes a pre-amplifier and equalization circuit 144 in like manner to that shown in Figure 3. The output of such an equalization circuit is coupled to a video RF amplitude demodulator 146 and to an A to D converter 148. The demodulated RF signal level is coupled to a sample-and-hold pulse processor 150 to which is also coupled a horizontal sync signal derived from the VTR FM video demodulator 146. An analog horizontal sync tip value obtained from the RF amplitude sensing demodulator 146 is also coupled on lead 154 to a second sample-and-hold circuit 156. Accordingly, in like manner to that described above in conjunction with Figure 3, an 8-bit parallel digital signal may then be provided at the output of the converter 148, which is indicative of the relative amplitude of the RF signal during the horizontal sync tip interval. Such a signal is coupled on lead 158 to the head position servo network 162 in a manner totally analogous to the coupling of such a signal on lead 62 to the network 106 shown in Figure 3. Also provided as an output from the A to D converter 148 is an EOC signal on lead 160 which is coupled to the network 162. As shown in Figure 4, within the head position servo network 162, each successive received data value of the RF level is received within a digital word comparator 164 and coupled to an 8-bit data storage register 166. As successive data values are received, the stored value and newly received value are coupled to a comparator/controller circuit 168 which responds to a field rate strobe on lead 170 and either stores new data and provides a store signal on lead 172 or a transfer signal on lead 174 to the storage register 166, and a new word load strobe signal on lead 176 to »AND« gate 178 to thereby control the transfer and storage of newly received RF level data values. Depending upon whether newly received data values are greater or less than the preceding values, signals are then coupled from the comparator/controller 168 to the up-down logic latch 180. Accordingly, if the new data values are greater than the preceding values, the controller 168 controls the logic latch 180 to count up and to provide an upcount output signal on lead 182 for so long as the new data continues to exceed the magnitude of the preceding received data. In contrast, when the new data is less than the old data, the controller 168 instructs the logic latch 180 to provide a down signal on lead 184 and to continue producing down count signals until again the result changes. The up or down signals on leads 182 or 184 respectively, are then coupled to the ramp generator network 186.

The ramp generator network 186 responds to tape vertical sync pulses and reference vertical sync pulses on leads 188 and 190, respectively, and to tach pulses and to forward/reverse tape direction indicating pulses on leads 192 and 194, respectively, in a manner totally analogous to the receipt of such signals on leads 86, 89, 98 and 102, respectively, as shown in the embodiment in Figure 3. In the embodiment of Figure 4, the tach pulses received on lead 192 are coupled through an AND gate 196 to a first latch 198. The input tach pulse signals on lead 192 are further coupled to a second AND gate 200 and thence through a second latch 202, and are also coupled to a tach pulse/field detector 204. Similarly, the forward or reverse direction indicating signals on lead 194 are also coupled to the first AND gate 196, through an inverter 206 to the second AND gate 200 and to the tach pulse/field detector 204.

The additional inputs indicative of the tape vertical sync pulses and the reference vertical sync pulses on leads 188 and 190 are coupled through a summation circuit 207 to provide a vertical sync pulse signal on lead 208 which is further coupled to the tach pulse/field detector 204. This combined vertical sync pulse signal on lead 208 is further coupled through a »one-shot« 210 on lead 212 to provide a start and stop pulse to the counter 214 and through a second »one-shot« 209 to provide the field rate strobe signal on lead 170. The counter 214 thus responds to the fundamental frequency provided by the crystal 216 to run at 0.5 millisecond intervals, to restart counting upon the initiation of each vertical sync pulse, and thereby provides 32 pulses per vertical field. The coupling of the respective signals on leads 192, 194, and 208 to the tach pulse/field detector 204 thus enables the combination of the three input signals and generates three appropriate output signals representing plus 1, a minus 1, and a minus 2 reset signals to coincide with the jump commands required for frame conversion. The track jump would cause mistiming in the time base corrector if not correctly identified therein. The three signal outputs from the detector 204 are further coupled to a reset word generator 218, the output of which is an 8-bit parallel loaded strobe pulse which is coupled to an 8-bit step counter 220, so as to preload the counter with a predetermined number of counts, such as, preferably, 32 counts upon each resetting. Accordingly, the tach pulses on lead 192 are coupled through the AND gates 196 or 200, and thence through the latches 198 or 202 in response to a latch output strobe on lead 222, the generation of which will be described hereinafter, and thence through OR gate 224 to the 8-bit step counter 220. Similarly, the resultant vertical sync pulse, which is also coupled to the counter 214, produces counter pulses on lead 226, which are coupled through a second OR gate 228 and thence to the 8-bit step counter 220.

Accordingly, the count held in the step counter 220 is incremented up or down progressively, depending upon whether the tach pulses on lead 192 are greater or less than the pulses produced by the recycle counter 214. The recycle counter 214 further provides output strobe signal through a »one-shot« 230 which is coupled on lead 222 and thence through the one-shot 232 to strobe the latches 198 and 202. The count held within the 8-bit step counter 220 is thus adjusted during each video field, depending upon the difference between the instantaneous tape speed pulses and the duration between the reference video sync pulses. The output of the step counter 220 is in turn coupled on leads 234 to the D to A converter 236, thence in analog form through amplifier 238 to provide the head deflection signal to the beam drive coil 240. Similarly, the up-down signals on leads 182 and 184, which correspond to the head position control signals provided by the microprocessor 106 in Figure 3, are coupled to the OR gates 224 and 228, and are there combined with the tach pulse on lead 192 and the recycle counter 214 to further adjust the count held within the 8-bit step counter commensurate with the need to reposition the head for track centering purposes.

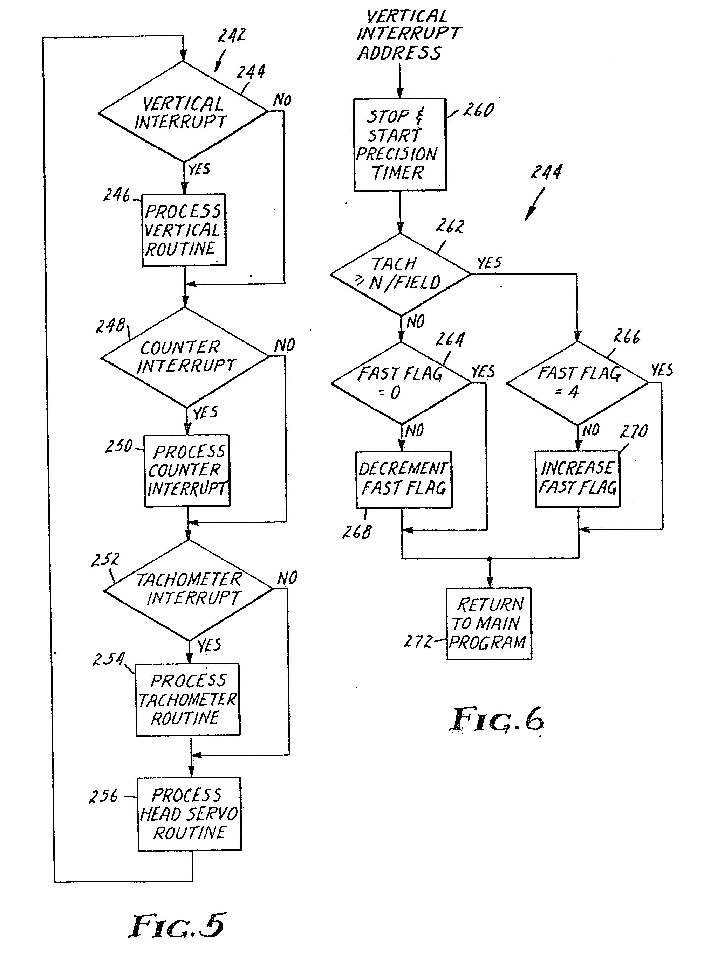

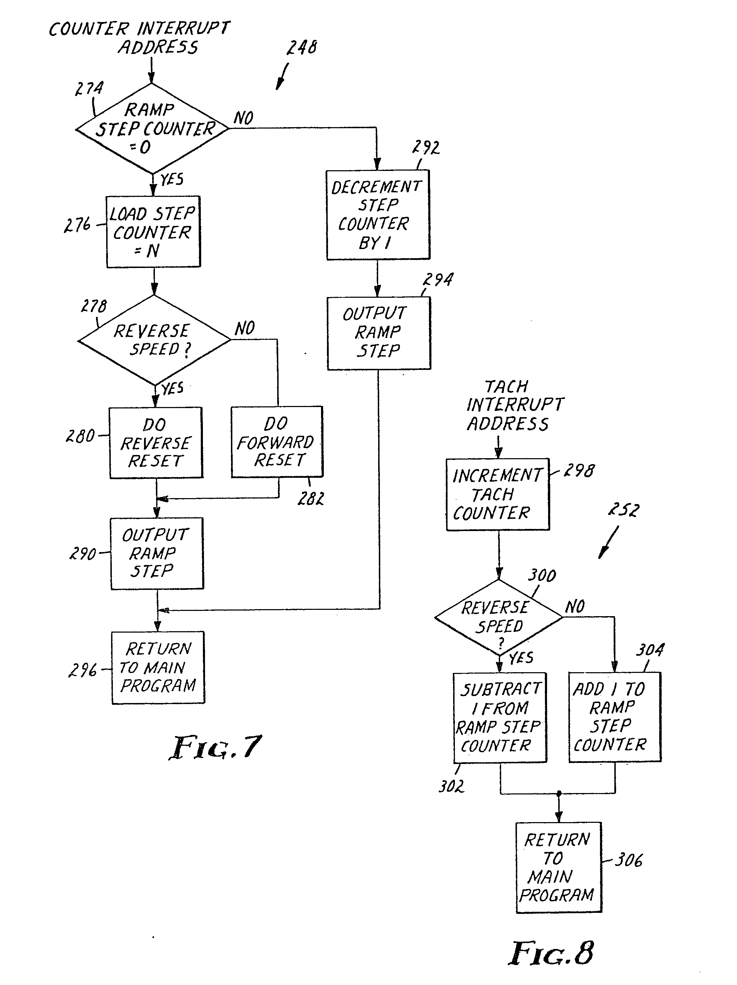

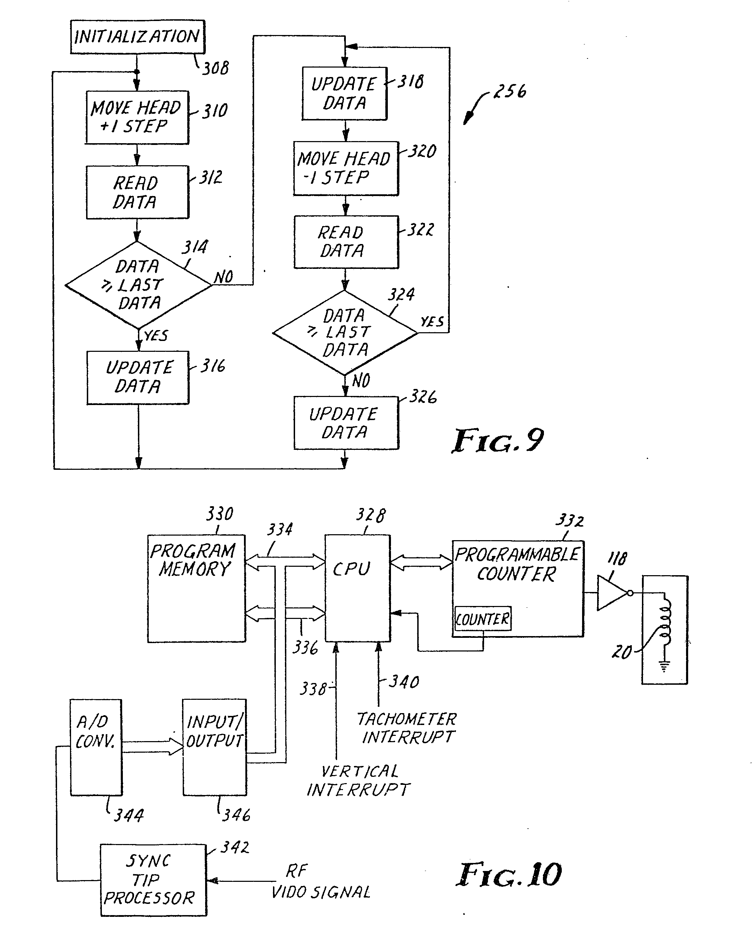

The manner in which the microprocessor sections 106, 107 and 108 within the preferred embodiment shown in Figure 3 are preferably structured to carry out the various processing of the signals is shown in a simplified flow diagram shown in Figure 5. The control chosen for the sequence of processing steps to be performed by the microprocessor is based on the »interrupt« capability of the particular microprocessor used (Intel 8085). However, other control methods could be used with equal facility. The interrupt sequence enables processing on demand, where the microprocessor performs each of the listed functions in Figure 5 according to a predetermined priority, which is represented by the relative order in the flow diagram. Upon the occurrence of a vertical signal on lead 87, the vertical interrupt 244 is initiated and the microprocessor then processes the vertical interrupt subroutine 246. See Figure 6. A counter interrupt 248 is enabled to be initiated by the 0.5 millisecond precision timer within the clock 110, at which time the counter interrupt subroutine is processed. See Figure 7. Similarly, tachometer interrupt 252 is initiated by the capstan tach pulses, one interrupt per tach pulse and upon each such occurrence the tachometer routine 254 is executed. See Figure 8. The head servo routine 256 is initialized and performed according to the timing of the »one-shot« delay set to provide the RF sample sequences at a selected point or points on the helical track, thereby completing the program such that a subsequent sequence may then be initiated.

Of critical importance to the entire execution of the routines set forth hereinabove, is the step counter, which responds to the precision 0.5 millisecond timer or clock, and counts the number of steps in the resultant ramp waveform. The number of steps thereby provided is related to the tape speed. Thirty-two steps are provided at zero or stop motion, while zero steps are provided at normal operating speed. Analogously, 40 steps will be provided in $1/4$ reverse speed, while at two times forward, there will be 32 steps in the opposite direction. A step is generated upon each increment of the precision clock unless a capstan tach pulse is received, which cancels the generation of that step. The counted number of steps thus determines the new DC center position of the playback head at the onset of the next scan. The scan then continues to recenter the head until the frame conversion (track jump) is indicated by the range limit rules described above.

The vertical routine shown in Figure 6 is, as mentioned above, initiated by the vertical field rate or vertical sync pulses which occur at 0.0167 second increments. Upon receipt of a vertical sync pulse, then, the vertical routine performs the following functions:

First, the step counter is reset;
Second, the tachometer counter is reset; and
Third, the precision 0.5 millisecond timer is stopped and restarted. This enables the ramp wave-form generator to sync to the incoming vertical sync pulse.

The start and stop of the precision timer causes the step wave form generated to be in sync with the vertical interrupt. The vertical routine also determines whether the tape speed is greater than normal for four consecutive fields and indicates this status by a fast flag output as provided via sequences 264 or 266 to decrement or increment by the fast flag routines 268 or 270.

The counter interrupt routine in Figure 7 is as follows:

At each cycle of the precision clock 110, the content of the ramp step counter is addressed. If it has counted down to zero, which occurs at the end of each field, the step counter is loaded with 32 counts, as shown in block 276. Upon so loading the tape direction monitor is similarly addressed as shown in block 278. If reverse tape motion is indicated, a reverse reset is executed as shown in block 280. If normal forward speed is indicated, a forward reset is indicated as shown in block 282, at which point an output ramp is provided as shown in block 290. As shown at the bottom of Figure 7, if on the other hand, at the initiation of the counter interrupt routine the step counter is not equal to zero, the count within the step counter is decremented by one count as shown in block 292. After such a decrementation the output ramp is again stepped as shown in block 294. Upon the outputting of the ramp step, the subroutine is then completed, and the microprocessor returns to the main program.

The tachometer interrupt is shown in Figure 8. The tachometer interrupt is initiated by the capstan tach pulses, one interrupt per tach pulse. The routine thus adds one count to the step counter upon each tachometer pulse if the tape is moving in the forward direction. If the tape is moving in the reverse direction, one count is subtracted from the step counter for each tach pulse. Accordingly, as shown in Figure 8, upon instruction from the interrupt address, the tach counter is incremented as shown in block 298. Upon such incrementation, the tape direction monitor is addressed as shown in block 300, and if the tape direction is in reverse, one count is subtracted from the ramp step counter as shown in block 302. If the tape is not moving in the reverse direction, one count is added to the ramp step counter as shown in block 304. The process then returns to the main program according to block 306.

These three interrupts, i.e. the vertical interrupt, counter interrupt and tachometer interrupt, working independently of each other, thus create the wave form conversion. This wave form varies continuously from $1/4 \times$ reverse speed to $2 \times$ forward speed. When the head is driven with such a wave form, the head will thus trace a path that is parallel to the recorded track through a whole range of speed thereinbetween. However, without the head servo routine, the head might still not be riding on the center of the recorded track. Hence, a head servo routine, shown in Figure 9, is necessary. As set forth above, by searching for the peak of the video RF level during horizontal sync tip (digitized value), the head control signal may be supplemented to control the positioning of the head toward the center of the track. This routine is initiated by helical track sample point selection timing as shown in block 308. Upon initiation, one count is added to the step counter so as to cause the head to move in an arbitrary direction one step, as shown in block 310. Thereupon, the value of the horizontal sync tip is then read as shown in block 312 and compared with a previously read data as shown in block 314. If the newly received data is greater than the last data, instructions are provided by block 316 for returning to the earlier block 312 to again move the head one step in the first direction.

Contrariwise, as shown in block 314, if the data is not greater than the previously received data, the data is again updated as shown in block 318 and the one count is subtracted from the step counter so as to move the head in the opposite direction one increment, as shown in block 320. Upon so doing, the data is again read as shown in block 322, and compared with the previously received data, as shown in block 324. If, at this point, the data is greater than the last received data, the routine again goes back to update the data as shown in block 318, and again moves the head one step in the opposite direction as shown in block 320. If, on the other hand, the data is not greater than the previously received data, the stored data value is again updated as shown in block 326, and the routine returns to block 310 to cause the head to move in the opposite direction one increment.

It should be emphasized that the data is read and the head moved incrementally to accomplish the head servo routine at a selected point or points along the helical scan track. This routine occurs only at the field rate, i.e. approximately every $1/60$ of a second.

Figure 10 sets forth a block diagram of the aided track following system of the present invention, as particularly set forth using an Intel Type 8085 central processing unit 328, in conjunction with a programmable read-only memory 330, such as Type 2718 (330) and a programmable counter 332 such as an Intel Type 8156. As shown in Figure 10, the central processing unit 328 is coupled to the read only memory 330 by means of data buses 334 and address buses 336, and responds to vertical interrupt and tachometer interrupt signals on leads 338 and 340.

The microprocessor 328 is controlled by vertical interrupt signals on lead 338 and tachometer interrupt signals on 340, to thereby control the central processor unit 328 in conjunction with programmed instructions in the read-only memory 330 and counter 332, to thereby generate the ramp signal which is coupled to the deflection amplifier 118 to drive the coil 20 as shown in Figure 3. Similarly, to provide the track centering signal, the RF video signal as provided in the RF detector 54 is coupled to the sync tip processor 342 and the output therefrom coupled to an A/D converter 344, and in parallel from to the input/output addressable latch 346 such as a Type 8255. The relative level of the video RF signal in the region of the horizontal sync tip is thereby compared within the processor 328 as set forth hereinabove and an appropriate supplement signal is added to the magnitude of the ramp signal, which is coupled to the deflection amplifier 118. As particularly structured for use with the Type 8085 CPU 328, port A of such a unit may be dedicated to provide the output to the D to A converter, which is used to provide the signal to the deflection amplifier and thence to the drive coil. Analogously, port B of such a CPU unit may be utilized as the input from which the digitized horizontal sync values may be provided from the A to D converter 60. Finally port C of such a CPU unit may be utilized to provide the output which is utilized to reset flip-flop latches between the respective priority interrupts and the CPU.

The various details by which such or similar central processing units may be structured to generate wave forms such as described hereinabove are all within the state of one skilled in the art and hence need no further description other than that provided in the flow charts set forth above. It is within the scope of the present invention that variants based on the above utilizing other types of microprocessors, read only memories, and the like, may similarly be implemented to provide similar signal processing functions.

The above-described improvements have been combined in a new video-helical scan reproducer. However, the improvements may be used independently of one another and in various applications other than helical scan reproducers.

Having thus described the present invention, what we claim is:

## Claims

1. A rotary scan video tape player (10) of the type having a playback head (12) operatively mounted within a rotatable drum (14) for scanning a magnetic tape (34) along a plurality of adjacent discrete tracks oriented at an angle relative to the lengthwise direction of the tape, said head being mounted within the drum on a head positioning transducer (16) for movement within a given range of the head in opposite directions relative to a nominal position along a path generally transverse to the direction of said tracks in response to a head position control signal, characterized by: network (104, 140) for forming said head position control signal as a ramp which varies in amplitude, duration and polarity for correcting the transverse position of the head (12) according to the need for correction of the angle of the scanning path, the available range of the head positioning transducer, and frame conversion requirements, wherein the instantaneous amplitude Y of the ramp varies according to the expression

$$Y = Y_0 + Y_1 + Y_2 \,,$$

where $Y_0$ represents an instantaneous amplitude component related to the difference between normal tape speeds and the instantaneous tape speed, $Y_1$ represents an instantaneous amplitude component related to the need to reset the head positioning transducer to maintain it within its available range and to enable frame conversion, and $Y_2$ represents an instantaneous amplitude component for centering the position of the head (12) over the recorded tracks, said network (104, 140) comprising:
i)   means (108 & 110, 207 & 210) responsive to video sync pulses from a reference video signal for provided a pulse train containing a predetermined number N of clock pulses for each video field, said field having a duration $T_v$ such that the period of said clock pulses equals

$$T_v \left( \frac{1}{N} \right),$$

ii)   means (96) for providing a tape motion signal having a number M of pulses occurring during the time $T_v$, the number and polarity of M being indicative of the tape speed and direction of tape motion respectively and the spacing between successive pulses corresponding to the time required for 1/N of the length of tape containing one video field to traverse past a given location,
iii)   means (108, 186) for monitoring the number of M motion indicating pulses occurring during the time $T_v$ that N clock pulses are provided to produce an off-speed indicating signal having a number P for each time period $T_v$, such that $P = -N + M$,
iv)   control means (108, 186) responsive to said off-speed indicating number P for generating said $Y_0$ component, the amplitude $Y_0$ varying between zero and d, where

$$d = \frac{D}{N} (P),$$

D being the distance on the tape (34) between adjacent tracks corresponding to successive fields, to thereby cause transverse movement of the head (12) in an amount commensurate with the relative shift of a given tracks as a result of tape movement to enable the head (12) to follow said track regardless of tape speeds or direction, and
v)   means (107, 218) responsive to a video field rate sync pulse for monitoring the magnitude of the head position control signal and the direction of tape motion for supplementing said signal with a reset signal, the magnitude $Y_1$ of which would result in transverse movement of the head in multiples of the distance D according to frame conversion requirements and available range of the head positioning transducer (16) to enable successive video fields to be repeated, jumped or skipped, such that the position of the head positioning transducer relative to the center position results in the production of said reset signal as dictated by the difference between N and M, whereby recorded frames on tape (34) may be repeated, jumped or skipped.

2. A player according to claim 1, characterized by said tape motion signal providing means (96) comprising a tachometer coupled to a capstan (88) adapted for driving said tape such that said tape speed indicating pulses are produced by the tachometer in direct proportion to the revolution of the capstan and hence to the speed of the tape past the capstan.

3. A player according to claim 2, characterized by said tachometer including means (96) including dual sensors for providing a pair of signals shifted in phase 90° to enable determination of the direction of tape motion based on the phase shift between the pair.

4. A player according to any preceding claim, further characterized by means (106, 162) responsive to the intensity of an RF video playback signal provided by said playback head for generating a closed loop feedback signal having an amplitude $Y_2$ which modifies said head position control signal and causes additional transverse movement of said head to thereby maintain said playback signal intensity at or near a maximum value.

5. A player according to claim 4, characterized by said means for generating a closed loop feedback signal including

a) RF detector means (54, 146) responsive to said RF video playback signal for providing a playback level sense signal indicative of the amplitude of said playback signal independent of the picture levels therein,

b) storage means (106, 166) for storing a digital representation of said level sense signal,

c) comparison means (106, 168) for comparing said stored digital representation with a subsequently received digital representation of said level sense signal and for providing an error signal indicative of the relative amplitudes thereof, and

d) control means (108, 186) for supplementing said head position control signal for controlling said transverse head movement so as to minimize said error signal.

6. A player according to claim 5, characterized by said RF detector means (54, 146) including means further responsive to reference sync signals contained within said playback signal for deriving said level sense signal based on the amplitude of the playback signal at a predetermined spatial location within each video field.

7. A player according to claim 6, characterized by said detector means (54) comprising timing means for gating on said detector means during the horizontal sync tip such that the amplitude of said level sense signal is indicative of the amplitude of the horizontal sync tip component of said playback signal.

8. A player according to claims 4 to 7, characterized by said means for generating a closed loop feedback signal including

a) means for supplementing said head position control signal with a track centering control signal to cause the movement of said head a nominal distance in one transverse direction,

b) means for determining a first amplitude of a picture level independent portion of said RF video playback signal following said movement,

c) means (150, 156) for storing a digital representation of said first amplitude,

d) means for further supplementing said head position control signal to cause the movement of said head a second nominal distance in said one transverse direction,

e) means for determining a second amplitude of said picture level independent portion of said RF video playback signal following said movement a second nominal direction, and

f) means for comparing said first and second amplitudes to generate a said track centering signal to cause successive movements of said head following each comparison a nominal distance in the transverse direction appropriate to cause said second amplitude to exceed said first amplitude.

9. A player according to any preceding claim, characterized by said control means (108) comprising:

a) counter means (220, 332) for determining the instantaneous amplitude Y,

b) means (210, 214 and 216, 328) for presetting said counter means at the on-set of each video field to a preselected number of counts,

c) means for generating a predetermined number of counts upon each occurrence of one of said tape speed indicating pulses,

d) means responsive to the generation of each of said predetermined number of counts for subtracting that number of counts from the number of counts in said counter means such that the remaining number in the counter means at any given time during a given field is proportional to the distance the head needs to be moved transverse to the direction of said tracks to enable the head to follow the track due to differences between the instantaneous tape speed and the speed at which the recording was originally produced, and

e) means responsive to said remaining number for generating an analog signal, the magnitude of which is proportional to the remaining number, and for providing a corresponding current as said ramp signal.

10. A player according to claim 4, characterized by said means for generating a closed loop feedback signal comprising

a) means for determining a first amplitude of a portion of said RF video playback signal,

b) means for storing a digital representation of said first amplitude,

c) means for supplementing said head position control signal to cause the movement of said head a nominal distance in one transverse direction,

d) means for determining a second amplitude of said RF video playback signal following said movement a second nominal direction, and

e) means for comparing said first and second amplitudes to generate a track centering signal to cause successive movements of said head following each comparison a nominal distance in the transverse direction appropriate to cause said second amplitude to exceed said first amplitude.

11. A player according to claim 10, characterized by said means for generating a closed loop feedback signal including

a) RF detector means responsive to said RF video playback signal for providing a playback level sense signal indicative of the amplitude of said playback signal independent of the picture levels therein, and

b)  by said amplitude comparing means including means for comparing sequentially received amplitudes of said playback level sense signal.

12. A player according to claim 10, characterized by said RF detector means including means further responsive to reference sync signals contained within said playback signal for deriving said level sense signal based on the amplitude of the playback signal at a predetermined spatial location within each video field.

13. A player according to claim 4, characterized by said feedback signal generating means including RF detector means responsive to said RF video playback signal for providing a playback level sense signal indicative of the amplitude of said playback signal independent of the picture levels therein, said detector means comprising

a)  switch means responsive to a sync signal component of said RF video playback signal for providing a sample of the RF envelope of said playback signal during an interval defined by said sync signal component,

b)  demodulation means responsive to said sample for providing a pulse, the amplitude of which relative to a base line is representative of the absolute amplitude of the RF envelope sample,

c)  first sample and hold means responsive to said sync signal component for passing a portion of each of said pulses substantially centered about a central point thereof free of noise and edge transition disturbances, and

d)  second sample and hold means responsive to said sync signal for providing as said playback level sense signal a continuous DC signal corresponding to said pulse amplitude.

14. A player according to claim 13, characterized by said demodulation means further comprising low pass filter means for alternating residual RF carrier components within the pulse and for restoring a DC base to said pulse to provide an accurate reference base line.

15. A player according to claim 13, characterized by said first sample and hold means further including filter means for attenuating sync signal frequency components to result in a substantially noise immune pulse output.

## Patentansprüche

1.  Videobandspieler (10) für Drehabtastung, mit einem Wiedergabekopf (12), der in einer drehbaren Trommel (14) betätigbar gelagert und geeignet ist, ein Magnetband (34) längs mehrerer benachbarter diskreter Spuren abzutasten, die unter einem Winkel zu der Längsrichtung des Bandes angeordnet sind, wobei der Kopf in der Trommel auf einem Kopfstellwandler (16) derart gelagert ist, daß der Kopf aufgrund eines Kopfstellsignals in bezug auf eine Nennstellung in einem gegebenen Bereich in einander entgegengesetzten Richtungen längs einer Bahn bewegbar ist, die sich allgemein quer zu der Richtung der genannten Spuren erstreckt, gekennzeichnet durch: ein Netzwerk (104, 140) zum Erzeugen des Kopfstellsignals in Form eines in seiner Amplitude, Dauer und Polarität veränderbaren Sägezahnsignals zur Korrektur der Querposition des Kopfes (12) entsprechend dem Bedürfnis nach einer Korrektur des Winkels der Abtastbahn und des für den Kopfstellwandler zur Verfügung stehenden Bereichs und Erfordernissen der Bildumwandlung, wobei die Momentanamplitude Y des Sägezahnsignals entsprechend dem Ausdruck

$$Y = Y_0 + Y_1 + Y_2$$

verändert wird, in dem $Y_0$ eine Momentanamplitudenkomponente darstellt, die mit der Differenz zwischen normalen Bandgeschwindigkeiten und der Momentangeschwindigkeit des Bandes in Beziehung steht, $Y_1$ eine Momentanamplitudenkomponente darstellt, die mit dem Erfordernis nach einer Rückstellung des Kopfstellwandlers derart, daß er in dem ihm zur Verfügung stellenden Bereich bleibt und eine Bildumwandlung möglich ist, in Beziehung steht, und $Y_2$ eine Momentanamplitudenkomponente darstellt, die zum Zentrieren des Kopfes (12) über den aufgezeichneten Spuren dient, wobei das genannte Netzwerk (104, 140) umfaßt:

i)  eine Einrichtung (108, 110; 207, 210), die aufgrund von Video-Synchronimpulsen eines Bezugs-Videosignals eine Impulsfolge erzeugt, die eine vorherbestimmte Anzahl N Taktimpulse für jedes Teilbild besitzt, das die Dauer $T_v$ hat, wobei die Dauer dieser Taktimpulse gleich

$$T_v \left( \frac{1}{N} \right)$$

ist;

ii)  eine Einrichtung (96) zum Erzeugen eines Bandlaufsignals mit einer Anzahl M von Impulsen während des Zeitraums $T_v$, wobei die Anzahl und Polarität von M die Geschwindigkeit bzw. die Richtung der Bandbewegung angeben und die Intervalle zwischen aufeinanderfolgenden Impulsen der Zeit entsprechen, die 1/N-tel der ein Video-Teilbild enthaltenden Länge des Bandes zum Vorbeigang an einer gegebenen Stelle benötigt;

iii)  eine Einrichtung (108, 186) zum Überwachen der während des Zeitraums $T_v$ auftretenden M Bewegungsanzeigeimpulse derart, daß N Taktimpulse ein eine Geschwindigkeitsabweichung anzeigendes Signal erzeugen, das in jedem Zeitraum $T_v$ aus P Impulsen besteht, wobei $P = -N + M$ ist;

iv) eine Steuereinrichtung (108, 186), die aufgrund der Anzahl P der eine Geschwindigkeitsabweichung anzeigenden Impulse die Komponente $Y_0$ erzeugen, deren Amplitude zwischen Null und d variiert, wobei

$$d = \frac{D}{N} \ (P)$$

und D der auf dem Band (24) gemessene Abstand zwischen einander benachbarten Spuren ist, die aufeinanderfolgenden Teilbildern entsprechen, so daß dem Kopf (12) eine Querbewegung erteilt wird, deren Strecke der durch die Bandbewegung bedingten Relativverschiebung einer gegebenen Spur entspricht, so daß der Kopf (12) unabhängig von den Geschwindigkeiten oder der Richtung der Bandbewegung der genannten Spur folgen kann, und

v) eine Einrichtung (107, 218), die aufgrund eines Videoteilbildfrequenz-Synchronimpulses die Größe des Kopfstellsignals und die Richtung der Bandbewegung überwacht und das genannte Signal durch ein Rückstellsignal ergänzt, dessen Größe $Y_1$ eine Querbewegung des Kopfes in Mehrfachen des Abstandes D entsprechend den Erfordernissen der Bildumwandlung und dem für den Kopfstellwandler (16) verfügbaren Bereich bestimmt, so daß aufeinanderfolgende Video-Teilbilder wiederholt oder verschoben oder übersprungen werden können, wobei die Stellung des Kopfstellwandlers relativ zu der Mittelstellung zur Erzeugung des Rücksetzsignals entsprechend der Differenz zwischen N und M führt, so daß auf dem Band (34) aufgezeichnete Teilbilder wiederholt oder verschoben oder übersprungen werden können.

2. Bandspieler nach Anspruch 1, dadurch gekennzeichnet, daß die Einrichtung (96) zum Erzeugen des Bandbewegungssignals einen Tachometer besitzt, der mit einer Bandantriebsrolle (88) gekuppelt ist, die geeignet ist, das Band derart anzutreiben, daß die von dem Tachometer erzeugten Bandgeschwindigkeitsanzeigeimpulse dem Umlauf der Bandantriebsrolle und daher der Geschwindigkeit der des Bandes an der Bandantriebsrolle direkt proportional sind.

3. Bandspieler nach Anspruch 2, dadurch gekennzeichnet, daß das Tachometer eine Einrichtung (96) mit zwei Sensoren besitzt, die zum Erzeugen von zwei um 90° phasenverschobenen Signalen dient, so daß aufgrund des Phasenabstandes der beiden Signale die Richtung der Bandbewegung bestimmt werden kann.

4. Bandspieler nach einem der vorhergehenden Ansprüche, gekennzeichnet durch eine Einrichtung (106, 162), die aufgrund der Intensität eines von dem Wiedergabekopf erzeugten, hochfrequenten Video-Wiedergabesignals ein in einer geschlossenen Schleife geführtes Rückkopplungssignal erzeugt, das die Amplitude $Y_2$

hat und das Kopfstellsignal modifiziert und eine derartige zusätzliche Querbewegung des Kopfes bewirkt, daß die Intensität des Wiedergabesignals auf einem Maximalwert oder in der Nähe desselben gehalten wird.

5. Bandspieler nach Anspruch 4, dadurch gekennzeichnet, daß die Einrichtung zum Erzeugen eines in einer geschlossenen Schleife geführten Rückkopplungssignals umfaßt

a) einen HF-Detektor (54, 146), der aufgrund des hochfrequenten Video-Wiedergabesignals ein Wiedergabepegelsignal erzeugt, das die von den Bildsignalpegeln des genannten Wiedergabesignals unabhängige Amplitude desselben darstellt;

b) eine Speichereinrichtung (106, 166) zum Speichern einer digitalen Darstellung des genannten Pegelsignals;

c) einen Vergleicher (106, 168) zum Vergleich einer gespeicherten digitalen Darstellung mit einer danach empfangenen digitalen Darstellung des Pegelsignals und zum Erzeugen eines Fehlersignals, das die relativen Amplituden dieser Signale darstellt, und

d) eine Steuereinrichtung (108, 186) zum Ergänzen des Kopfstellsignals zwecks Steuerung der Querbewegung des Kopfes derart, daß das Fehlersignal möglichst klein ist.

6. Bandspieler nach Anspruch 5, dadurch gekennzeichnet, daß der HF-Detektor (54, 146) aufgrund von in dem Wiedergabesignal enthaltenen Bezugssynchronsignalen das Pegelsignal entsprechend der Amplitude erzeugt, die das Wiedergabesignal an einer vorherbestimmten Stelle jedes Videoteilbildes besitzt.

7. Bandspieler nach Anspruch 6, dadurch gekennzeichnet, daß der Detektor (54) eine Zeitsteuereinrichtung besitzt, die den Detektor während der Horizontalsynchronimpulse auftastet, so daß die Amplitude des Pegelsignals die Amplitude des Horizontalsynchronimpulses des Wiedergabesignals darstellt.

8. Bandspieler nach den Ansprüchen 4 bis 7, dadurch gekennzeichnet, daß die Einrichtung zum Erzeugen eines in einer geschlossenen Schleife geführten Rückkopplungssignals umfaßt

a) eine Einrichtung zum Ergänzen des Kopfstellsignals durch ein Spurzentriersignal zum Bewegen des Kopfes in einer Querrichtung über eine Nennstrecke,

b) eine Einrichtung zum Bestimmen einer ersten Amplitude eines vom Bildsignalpegel unabhängigen Teils des hochfrequenten Video-Wiedergabesignals nach der genannten Bewegung,

c) eine Einrichtung (150, 156) zum Speichern einer digitalen Darstellung der genannten ersten Amplitude,

d) eine Einrichtung zum weiteren Ergänzen des Kopfstellsignals derart, daß dem Kopf eine Bewegung in der genannten Querrichtung über eine zweite Nennstrecke erteilt wird,

e) eine Einrichtung zum Bestimmen einer zweiten Amplitude des von dem Bildsignalpegel unabhängigen Teils des hochfrequenten Videowiedergabesignals nach der Bewegung über die zweite Nennstrecke und

f)  eine Einrichtung zum Erzeugen eines Spurzentriersignals aufgrund eines Vergleiches der ersten und der zweiten Amplitude derart, daß nach jedem Vergleich der Kopf aufeinanderfolgende Bewegungen in der Querrichtung über die Nennstrecke derart ausführt, daß die zweite Amplitude größer ist als die erste Amplitude.

9. Bandspieler nach einem der vorhergehenden Ansprüche, dadurch gekennzeichnet, daß die Steuereinrichtung (108) umfaßt:

a)  einen Zähler (220, 332) zum Bestimmen der Momentanamplitude Y;

b)  eine Einrichtung (210, 214; 216, 328) zum Voreinstellen des Zählers auf einen vorgewählten Zählstand am Anfang jedes Video-Teilbildes;

c)  eine Einrichtung zum Erzeugen von vorherbestimmten Zählständen beim Auftreten eines der Bandgeschwindigkeitsanzeigeimpulse;

d)  eine Einrichtung, die aufgrund der Erzeugung jedes der vorherbestimmten Zählstände diesen von dem Zählstand des Zählers subtrahiert, so daß der während eines gegebenen Teilbildes in dem Zähler verbleibende Zählstand der Strecke proportional ist, über die der Kopf quer zu den genannten Spuren bewegt werden muß, damit der Kopf der Bahn folgen kann, auch wenn zwischen der Momentangeschwindigkeit des Bandes und der Bandgeschwindigkeit bei der Aufnahme eine Differenz vorhanden ist, und

e)  eine Einrichtung, die aufgrund des verblei-benden Zählstandes ein Analogsignal er-zeugt, dessen Größe dem verbleibenden Zählstand proportional ist, und eine entsprechende Stromstärke als das genannte Sägezahnsignal erzeugt.

10. Bandspieler nach Anspruch 4, dadurch gekennzeichnet, daß die Einrichtung zum Erzeugen eines in einer geschlossenen Schleife geführten Rückkupplungssignals umfaßt:

a)  eine Einrichtung zum Bestimmen einer ersten Amplitude eines Teils des hochfrequenten Video-Wiedergabesignals;

b)  eine Einrichtung zum Speichern einer digitalen Darstellung der ersten Amplitude;

c)  eine Einrichtung zum Ergänzen des Kopfstellsignals derart, daß dem Kopf eine Bewegung in einer Querrichtung über eine Nennstrecke erteilt wird;

d)  eine Einrichtung zum Bestimmen einer zweiten Amplitude des hochfrequenten Video-Wiedergabesignals nach der genannten Bewegung über die Nennstrecke, und

e)  eine Einrichtung zum Erzeugen eines Spurzentriersignals aufgrund eines Vergleiches der ersten und der zweiten Amplitude derart, daß nach jedem Vergleich der Kopf aufeinanderfolgende Bewegungen in der Querrichtung über die Nennstrecke derart ausführt, daß die zweite Amplitude größer ist als die erste Amplitude.

11. Bandspieler nach Anspruch 10, dadurch gekennzeichnet, daß die Einrichtung zum Erzeugen des in einer geschlossenen Schleife geführten Rückkopplungssignals umfaßt:

a)  einen HF-Detektor, der aufgrund des hochfrequenten Video-Wiedergabesignals ein Wiedergabepegelsignal erzeugt, das die von den Bildsignalpegeln des genannten Wiedergabesignals unabhängige Amplitude desselben darstellt; und daß

b)  die Einrichtung zum Vergleich der Amplitu- . den eine Einrichtung zum Vergleich von nacheinander empfangenen Amplituden des Wiedergabepegelsignals besitzt.

12. Bandspieler nach Anspruch 10, dadurch gekennzeichnet, daß der HF-Detektor aufgrund von in dem Wiedergabesignal enthaltenen Bezugssynchronsignalen das Pegelsignal entsprechend der Amplitude erzeugt, die das Wiedergabesignal an einer vorherbestimmten Stelle jedes Videoteilbildes besitzt.

13. Bandspieler nach Anspruch 4, dadurch gekennzeichnet, daß die Einrichtung zum Erzeugen des Rückkopplungssignals einen HF-Detektor besitzt, der aufgrund des hochfrequenten Video-Wiedergabesignals ein Wiedergabepegelsignal erzeugt, das die von den Bildsignalpe-geln des genannten Wiedergabesignals unab-hängige Amplitude desselben darstellt und dieser Detektor umfaßt:

a)  eine Schalteinrichtung, die aufgrund einer Synchronsignalkomponente des hochfre-quenten Video-Wiedergabesignals wäh-rend eines durch die Synchronsignalkompo-nente definierten Intervalls eine Probe der HF-Hüllkurve des Wiedergabesignals entnimmt;

b)  eine Demodulationseinrichtung, die aufgrund der genannten Probe einen Impuls erzeugt, dessen auf eine Grundlinie bezogene Amplitude den Absolutwert der Amplitude der Probe der HF-Hüllkurve darstellt;

c)  eine erste Abtast- und Halteeinrichtung, die aufgrund der genannten Synchronsignalkomponente einen in bezug auf einen zentralen Punkt jedes dieser Impulse im wesentlichen zentrierten Teil desselben ohne Rauschen und Flankenübergangsstörungen weitergibt; und

d)  eine zweite Abtast- und Halteeinrichtung, die aufgrund des genannten Synchronsignals das Wiedergabepegelsignal in Form eines der genannten Impulsamplitude ent-sprechenden, kontinuierlichen Gleichstrom-signals erzeugt.

14. Bandspieler nach Anspruch 13, dadurch gekennzeichnet, daß die Demoduliereinrichtung ferner einen Tiefpaß besitzt, der dazu dient, restliche HF-Trägerkomponenten in dem Impuls zu schwächen und für den Impuls eine Gleichstrombasis wiederherzustellen, so daß eine genaue Bezugsgrundlinie erhalten wird.

15. Bandspieler nach Anspruch 13, dadurch gekennzeichnet, daß die erste Abtast- und Halteeinrichtung ein Filter besitzt, das zum Schwächen von Synchronsignalfrequenzkomponenten dient, so daß ein im wesentlichen rauschfreier Impulsausgang erhalten wird.

## Revendications

1. Magnétoscope (10) à balayage rotatif du type comprenant une tête de lecture (12) montée de façon active dans un tambour rotatif (14) de manière à balayer une bande magnétique (34) le long d'une pluralité de tracés séparés adjacents inclinés par rapport à la direction longitudinale de la bande, cette tête étant montée dans le tambour sur un transducteur (16) de positionnement de tête de façon à ce que la tête se déplace dans des limites données, dans des directions opposées, par rapport à une position nominale, le long d'un chemin sensiblement transversal à la direction des tracés, en réponse à un signal de commande de position de tête, caractérisé en ce qu'il comprend un circuit (104, 140) d'élaboration du signal de commande de position de tête sous la forme d'une rampe qui varie en amplitude, durée et polarité pour corriger la position transversale de la tête (12) en fonction du besoin de correction de l'angle du chemin de balayage, de la plage disponible du transducteur de positionnement de tête, et des conditions de conversion de trame, et en ce que l'amplitude instantanée Y de la rampe varie suivant l'expression

$$Y = Y_0 + Y_1 + Y_2$$

dans laquelle $Y_0$ représente une composante d'amplitude instantanée liée à la différence entre les vitesses normales de la bande et la vitesse instantanée de la bande, $Y_1$ représente une composante d'amplitude instantanée liée au besoin de remise à zéro du transducteur de positionnement de tête afin de le maintenir à l'intérieur de sa plage disponible et de permettre la conversion de trame, et $Y_2$ représente une composante d'amplitude instantanée pour le centrage de la position de la tête (12) sur les tracés enregistrés, ledit circuit (104, 140) comprenant:

i) des moyens (108 et 110, 207 et 210) qui répondent à des impulsions de synchronisation video, venant d'un signal video de référence, pour émettre un train d'impulsions contenant un nombre prédéterminé N d'impulsions d'horloge pour chaque trame video, cette trame ayant une durée $T_v$, de sorte que la période des impulsions d'horloge est égale à

$$T_v \left( \frac{1}{N} \right),$$

ii) des moyens (96) qui fournissent un signal de mouvement de bande ayant un nombre M d'impulsions qui se produisent pendant le temps $T_v$, le nombre et la polarité de M étant indicatifs de la vitesse de la bande et de la direction de déplacement de la bande, respectivement, et l'intervalle entre des impulsions successives correspondant au temps nécessaire pour qu'une fraction 1/N de la longueur de bande contenant une trame video traverse un emplacement donné,

iii) des moyens (108, 186) pour déterminer le nombre M d'impulsions indicatives du déplacement qui se produisent pendant le temps $T_v$ pendant lequel N impulsions d'horloge sont émises, pour produire un signal indicatif de l'écart de vitesse, contenant un nombre P d'impulsions pour chaque période $T_v$, tel que $P = -N + M$,

iv) des moyens de commande (108, 186) qui répondent à ce nombre P indicatif de l'écart de vitesse, de manière à engendrer la composante $Y_0$, l'amplitude $Y_0$ variant entre zéro et d, d étant égal à

$$\frac{D}{N} (P),$$

D étant la distance sur la bande (34) entre des tracés adjacents correspondant à des trames successives, de façon à provoquer un déplacement transversal de la tête (12) d'une quantité correspondant au décalage relatif d'un tracé donné du fait du mouvement de la bande, pour permettre à la tête (12) de suivre ce tracé indépendamment des vitesses ou de la direction de la bande, et

v) des moyens (107, 218) qui répondent à une impulsion de synchronisation de cadence de trame video pour déterminer la grandeur du signal de commande de position de tête et la direction de déplacement de la bande, afin de compléter ce signal avec un signal de remise en position, la grandeur $Y_1$ de ce signal provoquant un mouvement transversal de la tête par multiples de la distance D, en fonction des conditions de conversion de trame et de la plage disponible du transducteur (16) de positionnement de tête, pour permettre à des trames video successives d'être répétées, sautées ou basculées, de sorte que la position du transducteur de positionnement de tête par rapport à la position centrale à pour résultat la production du signal de remise en position tel que défini par la différence entre N et M, ce qui permet de répéter, sauter ou basculer les trames enregistrées sur la bande (34).

2. Magnétoscope suivant la revendication 1, caractérisé en ce que les moyens (96) d'élaboration du signal de mouvement de bande comprennent un tachymètre accouplé à un cabestan (88) prévu pour l'entraînement de la bande, de sorte que les impulsions indicatives de la vitesse de bande sont produites par le tachymètre en rapport direct à la rotation du cabestan et, par suite, à la vitesse de la bande sur le cabestan.

3. Magnétoscope suivant la revendication 2, caractérisé en ce que les moyens (96) comprenant le tachymètre comportent des détecteurs doubles pour fournir une paire de signaux déphasés de 90°, afin de permettre la détermination de la direction de déplacement de la bande, sur la base du déphasage entre les deux signaux.

4. Magnétoscope suivant l'une quelconque des revendications précédentes, caractérisé en ce qu'il comporte des moyens (106, 162) qui répondent à l'intensité d'un signal de lecture video à radio-fréquence, fourni par la tête de lecture, pour engendrer un signal de rétro-action à boucle fermée ayant une amplitude $Y_2$ qui modifie le signal de commande de position de tête et provoque un mouvement transversal additionnel de la tête, afin de maintenir l'intensité du signal de lecture à sa valeur maximale ou près de celle-ci.

5. Magnétoscope suivant la revendication 4, caractérisé en ce que les moyens d'élaboration d'un signal de rétro-action à boucle fermée comprennent

a) des (54, 146) de détection de radio-fréquence qui répondent au signal de lecture video à radio-fréquence pour fournir un signal de détection de niveau de lecture indicatif de l'amplitude du signal de lecture indépendamment des niveaux d'image dans ce signal,

b) des moyens de stockage (106, 166) pour stocker une représentation numérique du signal de détection de niveau,

c) des moyens de comparaison (106, 168) pour comparer la représentation numérique stockée avec une représentation numérique, reçue ensuite, du signal de détection de niveau et pour fournir un signal d'erreur indicatif de leurs amplitudes respectives, et,

d) des moyens de commande (108, 186) pour compléter le signal de commande de position de tête afin de commander le mouvement transversal de la tête de manière à minimiser le signal d'erreur.

6. Magnétoscope suivant la revendication 5, caractérisé en ce que les moyens (54, 146) de détection de radio-fréquence comprennent des moyens qui répondent à des signaux de synchronisation de référence contenus dans le signal de lecture pour élaborer le signal de détection de niveau sur la base de l'amplitude du signal de lecture à un endroit spatial prédéterminé dans chaque trame video.

7. Magnétoscope suivant la revendication 6, caractérisé en ce que les moyens de détection (54) comprennent des moyens de synchronisation pour autoriser le passage sur les moyens de détection pendant la fin de synchronisation horizontale, de sorte que l'amplitude du signal de détection de niveau est indicative de l'amplitude de la composante de fin de synchronisation horizontale du signal de lecture.

8. Magnétoscope suivant les revendications 4 à 7, caractérisé en ce qu'il comprend des moyens d'élaboration d'un signal de rétro-action à boucle fermée comportant:

a) des moyens pour compléter le signal de commande de position de tête avec un signal de commande de centrage de tracé, afin de provoquer le déplacement de la tête d'une distance nominale dans une direction transversale,

b) des moyens de détermination d'une première amplitude d'une partie indépendante du niveau d'image du signal de lecture video en radio-fréquence, après ce déplacement,

c) des moyens (150, 156) de stockage d'une représentation numérique de la première amplitude,

d) des moyens qui complètent à nouveau le signal de commande de position de tête pour provoquer le déplacement de la tête d'une deuxième distance nominale dans la même direction transversale,

e) des moyens de détermination d'une deuxième amplitude de ladite partie indépendante du niveau d'image du signal de lecture video en radio-fréquence, après ce déplacement d'une deuxième distance nominale, et

f) des moyens de comparaison de la première et de la deuxième amplitudes, pour engendrer un signal de centrage de tracé de manière à provoquer des mouvements successifs de la tête après chaque comparaison d'une distance nominale dans la direction transversale appropriée, afin d'obtenir que la deuxième amplitude soit supérieure à la première amplitude.

9. Magnétoscope suivant l'une quelconque des revendications précédentes, caractérisé en ce que les moyens de commande (108) comprennent:

a) des moyens de comptage (220, 232) pour déterminer l'amplitude instantanée Y,

b) des moyens (210, 214 et 216, 328) pour prérégler les moyens de comptage au début de chaque trame video, à un nombre préchoisi de comptes,

c) des moyens qui engendrent un nombre prédéterminé de comptes, à chaque émission d'une des impulsions indicatives de la vitesse de la bande,

d) des moyens qui répondent à la production de chacun desdits nombres prédéterminés de comptes pour soustraire ce nombre de comptes du nombre de comptes dans les moyens de comptage, de sorte que le nombre restant dans les moyens de comptage, à tout instant donné pendant une trame donnée, est proportionnel à la distance dont la tête doit être déplacée transversalement à la direction des tracés pour permettre à la tête de suivre le tracé du fait des différences entre la vitesse instantanée de la bande et la vitesse à laquelle l'enregistrement à été effectué initialement, et

e) des moyens qui répondent à ce nombre restant pour engendrer un signal analogique, dont la grandeur est proportionnelle au nombre restant, et pour fournir un courant correspondant comme signal de rampe.

10. Magnétoscope suivant la revendication 4, caractérisé en ce que les moyens d'élaboration d'un signal de rétro-action à boucle fermée comprennent:

a) des moyens de détermination d'une première amplitude d'une partie du signal de lecture video à fréquence radio,

b) des moyens de stockage d'une représentation numérique de cette première amplitude,

c) des moyens pour compléter le signal de commande de position de tête de manière à provoquer le déplacement de la tête d'une distance nominale dans une direction transversale,

d) des moyens de détermination d'une deuxième amplitude du signal de lecture video à fréquence radio, après le déplacement d'une deuxième distance nominale, et

e) des moyens de comparaison de la première et de la deuxième amplitudes, pour engendrer un signal de centrage de tracé afin de provoquer des mouvements successifs de la tête, après chaque comparaison, d'une distance nominale dans la direction transversale appropriée pour que la deuxième amplitude dépasse la première amplitude.

11. Magnétoscope suivant la revendication 10, caractérisé en ce que les moyens d'élaboration d'un signal de rétro-action à boucle fermée comprennent:

a) des moyens de détection de fréquence radio qui répondent au signal de lecture video à fréquence radio pour fournir un signal de détection de niveau de lecture indicatif de l'amplitude du signal de lecture indépendamment des niveaux d'image dans ce signal, et

b) ces moyens de comparaison d'amplitude comprenant des moyens pour comparer séquentiellement les amplitudes reçues du signal de détection de niveau de lecture.

12. Magnétoscope suivant la revendication 10, caractérisé en ce que les moyens de détection de radio-fréquence comprennent des moyens qui répondent à des signaux de synchronisation de référence contenus dans le signal de lecture, pour déterminer le signal de détection de niveau sur la base de l'amplitude du signal de lecture à un endroit spatial prédéterminé dans chaque trame video.

13. Magnétoscope suivant la revendication 4, caractérisé en ce que les moyens d'élaboration du signal de rétro-action comprennent des moyens de détection de radio-fréquence qui répondent au signal de lecture video à radio-fréquence pour fournir un signal de détection de niveau de lecture indicatif de l'amplitude du signal de lecture indépendamment des niveaux d'image dans ce signal, ces moyens de détection comprenant:

a) des moyens de commutation qui répondent à une composante de signal de synchronisation du signal de lecture video à radio-fréquence pour fournir un échantillon de l'enveloppe de radio-fréquence du signal de lecture pendant un intervalle défini par la composante du signal de synchronisation,

b) des moyens de démodulation qui répondent à cet échantillon, pour fournir une impulsion dont l'amplitude par rapport à une ligne de base est représentative de l'amplitude absolue de l'échantillon d'enveloppe de radio-fréquence,

c) des premiers moyens d'échantillonnage et de blocage qui répondent à la composante de signal de synchronisation pour laisser passer une partie de chacune des impulsions, sensiblement centrée autour de son point central, exempte de bruit et de perturbations de transition de bord, et

d) des deuxièmes moyens d'échantillonnage et de blocage qui répondent au signal de synchronisation pour fournir, comme signal de détection de niveau de lecture, un signal continu en courant continu correspondant à ladite amplitude d'impulsion.

14. Magnétoscope suivant la revendication 13, caractérisé en ce que les moyens de démodulation comprennent des moyens de filtrage passe-bas pour atténuer les composantes résiduelles de l'onde porteuse à radio-fréquence dans l'impulsion et pour rétablir une base de courant continu à l'impulsion, afin de fournir une ligne de base de référence précise.

15. Magnétoscope suivant la revendication 13, caractérisé en ce que les premiers moyens d'échantillonnage et de blocage comprennent des moyens de filtrage pour atténuer les composantes de fréquences du signal de synchronisation, afin d'obtenir une sortie d'impulsion sensiblement exempte de bruit.

19

FIG.1

FIG. 2

FIG. 3

FIG. 4

FIG.5

FIG.6

COUNTER INTERRUPT
ADDRESS

248

274 — RAMP
STEP COUNTER
= 0

NO → 292

DECREMENT
STEP
COUNTER
BY 1

YES

276 — LOAD STEP
COUNTER
= N

294

OUTPUT
RAMP
STEP

278 — REVERSE
SPEED ?

NO

YES

280 — DO
REVERSE
RESET

DO
FORWARD
RESET

282

290 — OUTPUT
RAMP
STEP

296 — RETURN
TO MAIN
PROGRAM

FIG. 7

TACH
INTERRUPT
ADDRESS

INCREMENT
TACH
COUNTER — 298

252

300
REVERSE
SPEED
?

NO

YES

302 — SUBTRACT
1 FROM
RAMP STEP
COUNTER

ADD 1 TO
RAMP
STEP
COUNTER

304

RETURN
TO
MAIN
PROGRAM — 306

FIG. 8

29

FIG.9

FIG.10